(19) Europäisches Patentamt
European Patent Office
Office européen des brevets

(11) **EP 1 262 792 A1**

(12) **EUROPEAN PATENT APPLICATION**

(43) Date of publication:
**04.12.2002 Bulletin 2002/49**

(51) Int Cl.$^7$: **G01S 13/00**, G01S 13/95, G01S 5/14, G01F 23/284

(21) Application number: **02012092.9**

(22) Date of filing: **31.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.05.2001 US 295156 P**

(71) Applicant: **Starlab Barcelona SL**
**Barcelona (ES)**

(72) Inventors:
• **Caparrini, Marco**
**08024 Barcelona (ES)**

• **Germain, Olivier**
**08017 Barcelona (ES)**
• **Soulat, Francois**
**08003 Barcelona (ES)**
• **Ruffini, Leonardo**
**08017 Barcelona (ES)**
• **Ruffini, Giulo**
**08023 Barcelona (ES)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **System for monitoring a feature of a surface by reflected satellite navigation signals**

(57) System for monitoring features like altitude, wave height or dielectric properties of the surface of preferably an ocean, a lake or the sea. The system comprises an antenna for receiving navigation signals from a satellite system like Galileo, Glonass or GPS reflected from this surface. The feature to be monitored is derived from the received signals.

Fig. 1

Definitions

H=Distance from MSS to EC

D=Distance from Down looking antenna Phase Center to MSS

R=Distance from Up Looking antenna Phase Center to EC

d= Distance between Antenna Phase Centers.

H=R-(D+d)

Up looking antenna

Down looking antenna LHCP

Antenna Detail

Earth Center (EC)

**Description**

**Technical Field to which the invention relates**

This invention relates to the field of Planetary Observation, including Earth Observation (EO), in particular Operational Oceanography (OO) and the Global Ocean and Coastal Observation System.

This invention relates in particular to the field of monitoring at least one feature of a surface, in particular a surface on Earth, and especially for monitoring a feature of a water body, like an ocean, a sea, a lake, or a river.

It addresses the use of Global Navigation Satellite System (GNSS such as Galileo, GPS and Glonass or future, Earth-bound or not, navigation systems) signals for altimetry (of the oceans, rivers, or lakes), sea state, currents, pollution (oil spills) and salinity measurements from stationary or slow moving receiver systems. The system can also be used from airborne (aircraft, stratospheric platforms) platforms. Other sources of opportunity can be used. For instance, and although not discussed in detail, the use of natural sources (such as Quasars) as sources of opportunity is also envisioned.

Two Global Navigation Satellite System (GNSS) constellations are presently operational, the Global Positioning System (GPS), owned and operated by the United States, and the Russian GLObal NAvigation Satellite System (GLONASS). In the next few years, the European Satellite Navigation System (Galileo) will be deployed, with the launch of the first block of satellites scheduled for 2003 and operations in 2008. Other GNSS signals are available from the GNSS augmentation systems such as Immarsat. More than 50 GNSS satellites will be soon in orbit, emitting microwave signals with well-characterized complex signals (mostly in L band) for at least a few decades, providing a very powerful infrastructure for EO and OO. These freely available signals can be used for purposes other than navigation. It is expected that such systems will some day be operational in other planets as well.

**Background art and assessment thereof**

This invention rests partly on the PARIS invention ("PARIS Altimeter System", ESA patent to Neira, Colmenarejo, Ruffini). PARIS is a bistatic radar system for space applications in which only the receivers need to be deployed. The emitters, the socalled sources of opportunity can be the radio transmitters in GNSS components. GNSS (such as GPS and the forthcoming Galileo) systems are premium candidates for PARIS applications, given their coverage, potential resolution, long-term availability and signal characteristics (continuous wave spread spectrum signals). GNSS are based on the constancy of the speed of light and a relative measurement system and they are self-calibrating, so they are very stable and the measurements are highly repeatable. This is a fundamental aspect in this patent.

As to the prior art we refer to US patent 6,137,433 and US patent 5,546,087 (PARIS) and the prior art cited therein. In the following, it is assumed that these two prior art documents are known to the reader.

In the PARIS patent above, the main concept is the use of delay measurements from sources of opportunity for altimetry using a spaceborne receiver. The patent is focused on the use of code ranging, and no details are given on the use of carrier phase altimetry.

The PIP concept, subject of another patent (see reference below), refers to the use of a dual frequency system. The reflected (complex) electric fields (for simplicity we will sometimes use the term "field" to refer to the complex electric field) from two nearby frequencies are combined at the receiver to synthesize a longer wavelength (widelaning). Our work shows that this combination is less sensitive to surface roughness and motion, as it acts as with a longer wavelength. The combination of GPS L2 and L5, for instance, acts as wavelength of about 5 meters---which is much less sensitive to wave motion on the surface. This means that it will be easier for the receiver to track this interferometric phase---a lower bandwidth Phase Lock Loop can be employed. In what follows, we allow for the use of these types of combinations to compensate for moving surfaces. It is important, in this respect, that the Ionospheric and Tropospheric effects be compensated for using the dual frequency GNSS system capabilities, or other standard means to provide these corrections, using data from the up looking antenna.

An important point is that GNSS systems are premium candidates for multi-static radar applications, given their global and dense coverage, potential resolution, long-term availability and stability and signal characteristics (continuous wave spread spectrum signals). The American pioneering GNSS system, GPS, is presently undergoing some improvements (the addition of new civilian codes, new frequencies and increased power), and the European system, Galileo, will offer a wide variety of signals, adding even more to the possibilities.

In summary, PARIS is an instantiation of multi-static Radar in which reflected GNSS signals are preferably used to infer altimetric properties of the sea surface from space.

Wind measurements are claimed in US patent 6,137,433 using GPS reflected signals using Delay mapping for wind speed retrieval. We will discuss here also an extension of this idea using the full Delay Doppler maps from various GNSS (GPS and Galileo and others) reflections from airborne moving platforms, to infer directional mean square slopes of the surface (whatever surface), which can be related, using slopewind models, to both wind speed and direction for ocean surface reflections.

**Disclosure of the invention**

In the following, the invention is primarily explained with regard to its implementation in determining a feature of a surface of a water body. The invention is applied to other surfaces in an analogous manner.

Here we propose using reflected signals (from sources such as GNSS, like GPS and Galileo or any of their augmentation components, such as WAAS, EGNOS and future pseudo-lite developments) using both carrier and code pseudo-ranges from low altitude applications to infer the sea, river, lake height or coastal sea level as well as the sea state and currents and salinity and pollution from a receiving system on a static or slowly moving platform, e.g., a bridge a coast cliff, a off-shore platform, or a boat, as well as an aircraft or stratospheric platform or geo-stationary satellite. Thus, the system will act as an Absolute Tide, Sea State, Current, Pollution, Salinity Remote Sensing System, with applications also in rivers and lakes.

We propose the use both direct and reflected GNSS signals (in one or two polarizations) to obtain water level referred to the GNSS coordinate system (which itself refers to the Earth Centre). This system can provide absolute altimetric and power measurements without the need for complicated set-ups or recalibration.

The invention involves the reception and use of the direct and reflected signals from multiple emitters (in one or two polarizations) to infer sea surface roughness (which is also related to pollution), sea surface motion (both orbital velocities as well as horizontal), which is related to sea state and surface winds and currents.

This is a cheap, low maintenance, accurate and precise method, and available on a long term basis thanks to the long life and future outlook of GNSS. The system is also sensitive to the surface dielectric constant (pollution, salinity). Long-term stability makes this an ideal system for climatic monitoring.

Systems in accordance with the invention are described in claims 1 to 24.

The invention is also incorporated in a method of monitoring at least one feature of a water body, said method, preferably, also incorporates the subject-matter of the dependent claims 2 to 15.

For the purposes of the present patent, we propose an invention for using GNSS reflect signals to infer the sea, river, lake height or coastal sea level from a receiving system on a static or quasi-static platform, e.g. bridge or coast cliff with absolute precision. This means that the system we propose is able to measure the mean sea surface height with respect to the GNSS reference system, which is itself anchored to the Earth Centre. Thus, the system can act as an Absolute Tide Gauge. The term Absolute here is used to emphasize that it is superior to Relative Tide Gauges, which are the standard.

An important aspect for altimetric applications is that we propose a new way to process the data, based on the concept of the average Interferometric field, in order to make the system more accurate and robust with respect to ocean motion and other sources of noise.

The fact that we use both direct and reflected GNSS signals means we can obtain water level referred to the GNSS coordinate system (which refers to the Earth Centre), as we will now explain. Thus, this system can provide absolute measurements without the need for complicated set-ups or recalibration. We also propose the reception and use of the reflected signal to infer sea surface roughness, which is related to sea state and surface wind. This is a cheap, accurate and precise method, and available on a long term basis thanks to the long life of GNSS. We also propose to use, if needed, the PARIS Interferometric Processor method (subject of another ESA patent in Europe) to use the reflected signals (noisy in nature) in a way that makes the measurements less sensitive to surface roughness and motion. This allows using the average field phase of the signals using less temporal averaging.

This system relies on GNSS ranging technology (using either code or phase ranging), electromagnetic scattering from moving surfaces, and the use of two or more frequencies.

A key aspect of this invention for altimetric purposes from very low altitude applications is the fact that it can self correct for atmospheric effects. On one hand, the direct signal (for the up-looking antenna positioning) can be calibrated for ionospheric and Tropospheric positioning using the standard techniques from GNSS, leading to unbiased millimetric positioning. On the other hand, the direct and reflected signals received by a sensor near the reflecting surface undergo the same ionospheric and Tropospheric effects (delays). The system can therefore measure accurately the distance between the sea surface and the receiver. Since the receiver is absolutely positioned in the GNSS reference system, the sea surface altitude is absolutely positioned. From low altitude applications (e.g., aircraft), the troposphere still has an impact on the measurements, and will need to be corrected using some means, while the ionospheric electron content will still not need to be corrected.

The long term availability of GNSS signals, together with the accuracy and precision of the order of 5 mm after a few days, make this a very relevant tool to study Global Warming, which may lead to rising sea levels at the rate of 3 mm/yr. A set of such receivers on coastal and other platforms will enable an accurate measurement of global sea level, in coherent, consistent and synergic combination with spaceborne uses of this technology.

The system is also low maintenance, as no part of it need touch the surface.

The essence of this patent is an invention to use GNSS reflected signals for a low-maintenance, absolute and accurate tide and wave gauge for rivers, lakes, and the ocean, from static platforms near the water surface.

**Sea State Gauge and bias calibration**

We propose the use of the reflected field magnitude and phase temporal series, as measured by a GNSS receiver in the form of the result of Delay Doppler complex correlation with known or estimated codes, straight direct-reflected correlation, or other means, to estimate sea state.

Delay Doppler correlation is the process of generating a signal similar to the one emitted by the transmitter (e.g., a replica of a signal emitted by a GNSS component, which have a standard format) but with a selected delay and Doppler (i.e., arriving later or earlier, and with a selected carrier Doppler), and then cross-correlating the generated signal with the received one. In some cases, one is interested in the peak of the correlation, which is found with a specific Delay and Doppler. The complex correlation peak gives a measure of the electric field averaged over the (normally short) coherence integration time.

In other cases, one may want to obtain correlations with Delays and Dopplers other than that of the maximum correlation, to generate Complex Delay Doppler maps. In the following, we will refer to the correlation peak only, unless otherwise stated.

The reflected field from a flat and static surface is very different from the one from a moving, rough surface. The impact of this can be modelled as a function of significant wave height, mean square slope, correlation length, orbital motion the surface elevation spatio-temporal spectrum, the characteristic function of the surface or more sophisticated methods to model the surface. There is a direct effect of changing surface conditions in the reflected field. We propose to model this behavior using theoretical and experimental data to produce a working model that permits inferring the sea state (which is also related to wind speed on the surface) to these field time series characteristics, including appropriate calibration in situ if needed. Some of these field characteristics include the coherence time and field (velocity) drift rate, as well as spectral width. Other measures can be used, but the point is that the basic information is encoded in the reflected field time series, which can therefore be used to infer surface parameters. The use of different frequencies, including PIP combinations to synthesize longer wavelengths, provides additional information, as they measure the surface at different scales and this provides ocean spectral information at different scales as well.

The measurement of sea state is also important to calibrate correctly the Absolute Tide Gauge functionality, as different sea conditions can create a bias in the phase ranging information. This effect can be modelled and compensated for if the sea state is known, which is why the Sea State Gauge functionality is a key aspect in this patent. We assume the use of this technique in what follows.

**Advantages of the invention**

An important aspect is altimetric absolute calibration with respect to the GNSS reference system, since the up looking antenna can be absolutely geo-referenced, and atmospheric effects are eliminated from the low-altitude differencing scheme (reflected vs. direct). Altimetry will be performed using code and phase GNSS ranging.

A key aspect is thus the use of the relative (reflected versus direct) complex electric field, which makes the system more robust and immune to incident field fluctuations (short or long term) and other common errors (such as those due to the atmosphere, "navigation bits", or clocks).

Another key aspect of this invention is the fact that it can self-correct for atmospheric effects---especially in low altitude applications. On one hand, the direct signal (for the up-looking antenna positioning) can be calibrated for Ionospheric and Tropospheric positioning using standard GNSS processing techniques or other means, leading to unbiased sub-centimetric positioning of the antennas. Since the direct and reflected signals for a sensor near the reflecting surface undergo the same Ionospheric and Tropospheric effects, the system, relying on the difference of such measurements, measures accurately the distance between the sea surface and the receiver. Since the (GNSS) up-looking part of the receiver is absolutely positioned in the GNSS reference system, the sea surface level can be absolutely positioned. This is a key aspect for Climate applications, which require accurate, stable and long-term monitoring of the mean sea level. In addition, the system can be moved to a new place---it will recalibrate automatically. From medium altitude applications (aircraft, stratospheric platforms), the troposphere will need to be calibrated (unlike the ionosphere) using some other means. High altitude applications require full atmospheric calibration. The ionospheric portion of the correction can always be provided if the system is dual frequency (other possibilities exist).

Another fundamental aspect is that, through the complex electric field measurement, as derived from Delay Doppler Complex Correlation, the system will measure sea state, that is, it will permit sensing of the directional ocean spectrum, in particular of significant wave height. This can also be related to surface winds and surface pollution (oil spills). Surface winds can indirectly be inferred from surface roughness using models, and oil spills also affect surface roughness (as well as the surface dielectric constant) in manners, which can similarly be modelled. These measurements are presently very scarce on coastal environments (satellite measurements are contaminated by the land near the coast). Appropriate theoretical, semi-empirical or empirical modelling and experiments can be used to deliver the required models for oil spill monitoring, and wind retrieval, but the essential point is that changes in dielectric constant and surface elevation spatio-temporal dependence will affect, in a rather direct manner, the spatio-temporal field measurements.

Another important aspect is that the proposed system will measure the surface dielectric constant, which affects power return (accurately measured by comparison of the direct and reflected signal). In particular it will measure salinity and it will be sensitive to surface pollution. This is partly due to power absolute calibration using the direct signal power as a reference, and to the particular relationship between power received, geometry, and the surface dielectric constant in single or full polarization. Although roughness also affects power return, it has a different geometric and temporal dependence, which allows for separation of dielectric and roughness effects. Moreover, roughness can be estimated by other means, i.e., using the field temporal behavior.

A fundamental aspect of this invention with respect to phase ranging (as opposed to code ranging) and altimetry is that it is based on using the average (direct-reflected) Interferometric complex electric field to track the interferometric phase. Without this element it will be difficult to track the Interferometric phase for altimetric purposes under general sea state conditions due to intense fading events (speckle) and low phase coherence. In this invention the average Interferometric field is preferably tracked for altimetric purposes (although the instantaneous field may be tracked in calm sea, or river/lake, conditions, as well as the code, more generally but less accurately available). A Kalman (temporally averaging) filter approach can be used to track the Interferometric field. Tracking the reflected Interferometric field due to changes with respect to the mean sea level, and not the individual signal phases, which are not really coherent in the standard sense, is very advantageous. Indeed, the phase of the reflected signal is very badly behaved (and in fact very sensitive to sea state), while the mean Interferometric field is a slowly varying quantity amenable to efficient tracking systems (e.g., Kalman filtering). If an a priori solution is known (e.g., from tide models or Mean Sea Surface models), the measured Interferometric field can be "corrected" (counter-rotated) to leave only the "anomalies", which will be, in general, slowly time dependent, but of smaller size and easier to track. This important aspect allows for longer temporal averaging, as the corrected field should be closer to a quasi-stationary random process.

The use of **synthetic wavelenght** from the combination of two frequencies is also a potentially preferred embodiment (PIP patent), as it will make the system more immune to sea state (good for altimetry) as well as provide another wavelength with which to sense the surface roughness and sea state. For altimetry, the combination of two frequencies is formed, and then the combination reflected-direct is used. Using such multi-frequency approaches is important if there is not enough time for averaging the single frequency Interferometric field. The average field magnitude decreases exponentially with significant wave height-wavelength ratio, and it is therefore necessary to average more to retrieve the average field out of the noise. This can be a limiting factor if the altimetric signals of interest have fast dynamics as compared to the averaging time. The use of synthetic, longer wavelengths is therefore useful. This is an important consideration, for example, in aircraft applications, where the Mean Sea Surface Anomalies may induce relatively rapid changes in the geophysical field phase.

Another aspect is the analysis of the quasi-instantaneous reflected field time series to infer sea state properties. In particular, the simultaneous view of different satellite reflections in different directions and at different elevation angles will allow directional wave spectrum measurements. This is partly due to the fact that the impact on the electric field due to surface motion depends on the direction of the waves with respect to the emitter-specular point-receiver defined plane. These measurements are useful in themselves, but also important to calibrate the Tide Gauge system: sea state can introduce a bias in range measurements if not correctly accounted for. The reflected signal signature is also sensitive to currents and salinity (which affects power) as well as surface pollution (which affects surface roughness and surface dielectric constant). For the purposes of sea state monitoring, it is not essential to absolutely calibrate the system with a dual frequency up looking receiver.

Given the long term stability of the system, and the fact that it exploits both the direct and reflected signals, the system will also be used to map surface dielectric properties (such as sea surface salinity), which are slow changing and have different geometric (e.g., elevation angle of the emitter, behavior), and can therefore be separated from other effects.

The long term availability of GNSS signals, together with the accuracy and precision of the order of 5 mm after a few days, make this a very relevant tool to study Global Warming, which may lead to rising sea levels at the rate of 3 mm/yr. We propose that a set of such receivers be deployed on coastal and other platforms to enable an accurate measurement of global sea level changes in synergy, coherence and consistency with airborne of spaceborne applications of this technology.

The system is also able to measure, simultaneously, the direct and reflected signals from multiple GNSS satellites (up to 8 or 10 when Galileo becomes available). This means that the solutions are more robust, can deliver sampling in a 2D fashion (see picture of a specular point map), and can provide directional measurements.

The system is also low maintenance, as no part of it need touch the surface. Receivers can also be moved or replaced, without loss accuracy, thanks to the implicit GNSS positioning.

The system as described can also be deployed on boats or ships and even airborne or slowly moving (with respect to the Earth Surface) spaceborne platforms (in particular, on geo-stationary satellites), to provide sea state or other measurements, which can be shared among them and with coastal sensors via an amenable communication system to provide a network for sea monitoring and alert as well as prediction, possibly using distributed computing techniques. The information from other sensors (e.g. meteo) on the platforms can also be exchanged (see figure below). All this information can be ingested by an assimilation system for the provision of analysis and forecasts.

The use of the same system on coasts, boats, aircraft and satellites will provide a very coherent, homogeneous, consistent, global, and very stable infrastructure for dense measurements and long term monitoring of the ocean surface.

The deployment of the sensor on airborne and spaceborne platforms is also envisioned. Techniques using the full complex Delay Doppler maps are also described.

**In the following different embodiments of the invention are described in detail.**

Different methods are proposed for instrumental configuration.

1. One uses an up and a down looking antenna (two antennas).

2. The second uses a single antenna capable of receiving both direct and reflected signals.

3. The third uses a single down looking antenna (but this system needs separate calibration for absolute measurement purposes).

4. The fourth uses two down looking antennas (one LCHP, the other RHCP) that can be used for **full polarimetric sensing** of the surface, delivering greater sensitivity for altimetry, dielectric mapping and roughness. Two up looking antennas can also be used to accurately measure the incident polarization. RHCP means Rights Hand Circular Polarisation and LHCP means Left Hand Circular Polarisation.

5. In the fifth, a **high gain antenna (or antennas, if polarimetric measurements are intended)** down-looking antenna can be used to focus on a particular patch of the ocean. This can be useful for higher gain use of GNSS signals emitted from geo-stationary platforms, and for the extraction of current measurements.

If more than one front end/sampler is used, it is important that **a common** clock is used to downconvert and sample the data. A common clock must be used to synchronize all the front ends and sampling sub-systems.

**Altimetric measurements** are obtained from using the direct and reflected signals. For field (phase) ranging (as opposed to code ranging) it is useful to have a good a priori model of the height (which can be obtained from code ranging measurements, for example) as well as the use, in some fashion, of the time-averaged interferometric field, as this will permit the use of a well-defined "average" phase. The Interferometric field is directly related to the height of the antennas over the reflected surface. We emphasize the difference between working with the instantaneous phase to extract (via models or averaging to combat fading or other bad behavior) and working with the instantaneous field, which contains more information and provides a robust starting point.

The sea state and spectrum characteristics can be obtained through the use of reflected phase properties. In particular, it can use the coherence integration time (phase coherence) to relate it to sea state. It also uses the **Interferometric (reflected-direct) field velocity vector statistics.** Simulations and experiment show that this quantity correlates very well with significant wave height. For directional measurements, the use of simultaneous reflections (there will be about 4 to 8 available) will permit directional properties to be measured. The same applies to **current** measurements, which cause a broadening of the field spectrum and additional Doppler shifts affecting in different manner the different reflections.

If the complete glistening zone is in view we should not expect a huge impact on the Doppler centroid. Note that the geometric specular point is insensitive to surface horizontal motion (a horizontally moving mirror at the specular does not affect the emitter, scatterer receiver distance). It is easy to see, however, that the Doppler spectrum will broaden in a rather specific manner. This should be distinguishable to the spectrum broadening due to horizontal motion. In addition, the use of a high gain antenna/s, focusing on an off-specular location/s (e.g., using a geo-stationary source of opportunity for simplicity) will allow for Doppler centroid displacement measurements associated to currents (using more than one antenna will allow for current directions detection). Horizontal velocities, projected to the emitter-target-receiver lines and divided by the electromagnetic wavelength, induce Doppler shifts in the received signal. Since the direct signal is available for comparison (correcting, e.g., satellite or receiver clock errors), these Doppler shifts can accurately be measured.

Surface properties from moving platforms can also be obtained using the full Delay Doppler maps, which are sensitive to surface roughness (directional means squared slopes), as measured from the simultaneous reflections of several satellites.

**Pollution** can be detected both from its signatures on the field spectrum and statistics, as well as on the power (dielectric constant) as measured by the system. It also uses the information from the measurements in different directions and at different elevation angles. This is also the case for **salinity,** which in addition has different temporal dynamics than the other variables (in general much slower changing).

The basic approach to measure **salinity** using this system from, e.g., a coastal location follows quite directly from the above discussion. The dielectric constant can (must) be estimated as a slowly varying parameter. As we have seen, each source of opportunity will produce a time series of the electric field, which we can measure using the appropriate processing, as described. There will be about several available sources of opportunity, depending on location and orientation (using GPS, Galileo and Immarsat). The fundamental issue is to model this electric field data accurately, as usual.

We will assume now that a good model of the average power is available. Let us use, for illustration, a simple model of the average power that depends to first order on the mean squared slope (directional) and dielectric constant of the surface, with specific, and geometric dependence parameters (emitter location, receiver location, surface model).

Ingesting these measurements into a Kalman Filter or other temporal fitting/filtering method (combining the information from all the available signals of opportunity), these seeked parameters will be estimated through a best fit of the observed power, possibly combining information from all the available reflections. The different variables will be given appropriate temporal drift rates. Note that salinity is difficult to measure, but that its slow drift rate will significantly reinforce the solution. The goal, as in any model fitting, is to choose the best parameters (in this case directional mean squared slopes as well as salinity, both varying in time) to match the data.

Note that the measurements will be taken in different elevations and azimuths (depending on the location of the emitters, receivers, etc), and that at low altitudes each measurement will essentially integrate all the power from the entire glistening zone (since the fist chip already spans a very large facet tilt angle set from low altitudes).

Note that it is also advantageous to use different polarizations (more information of partially independent character). The behavior of the reflectance near the Brewster angle is particularly sensitive to salinity. For this purpose it would be preferred to employ a fully polarimetric system for both the up and down looking signals.

Although it will not be strictly necessary to track the phase, the time series of the complex field, and, in particular, the phase, can be used to determine sea state. This will provide measurements of swh and orbital velocity, complementing the mss estimates for further corrections.

Calibration of the instrument is important, of course. In principle, this can be easily achieved, given the differencing nature of the measurements, and the self-calibration of the instrument. Long term stability is also assured by the differencing mechanism and the nature of GNSS systems (which basically rely on the constancy of the speed of light), an important element to contribute to long term Ocean Observation systems (such as GOOS and C-GOOS, the Global Ocean Observation System and the Coastal Global Ocean Observation Systems).

**Method 1: Absolute measurements using two (or 4) antennas.**

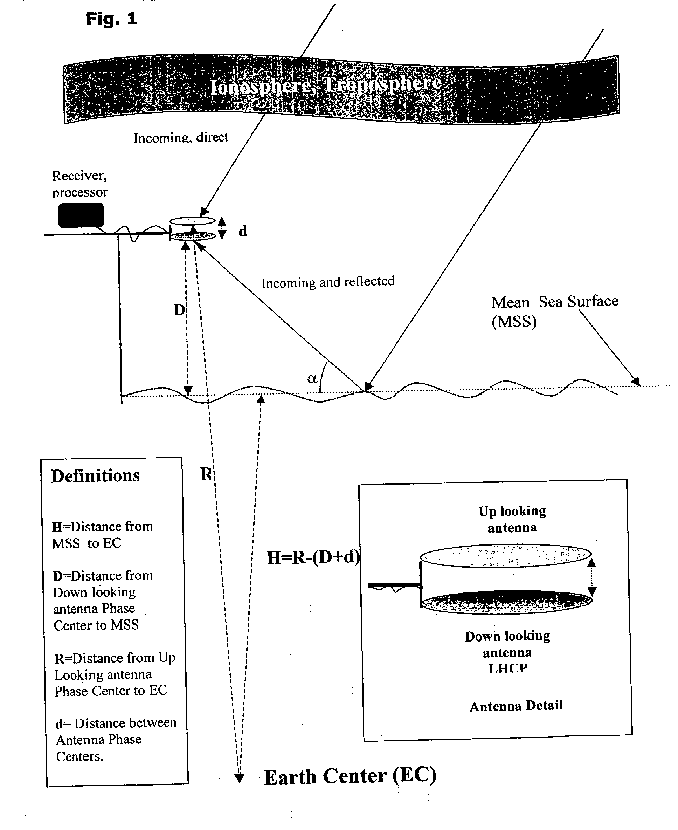

In the following, a first method (method 1) is described with reference to figure 1.

This system involves 2 antennas, one looking up (RHCP) and one looking down (LHCP). Both antennas can be protected by ground planes or any other method to provide hemispheric aperture (allowing no radiation leaks from the wrong side).

If dual polarization up and dual polarization down is desired, the system could consist of one up LHCP and one RHCP, and one RHCP and LHCP down (although other polarimetric configurations are possible, of course). This would lead to a total of four antennas.

The receiver is dual frequency or better, to correct for ionospheric delays in the up looking antenna for precise positioning (better than a cm).

The receiver locks in to the up looking antenna's direct signal, and uses it for GNSS positioning of the up looking antenna phase centre. This means we have measured **R**, the distance from the up looking antenna phase centre to the Earth Centre. During this process both Tropospheric and ionospheric effects are corrected and calibrated for. Precision and accuracy are of the order of a few millimetres, as usual with dual frequency GNSS positioning. Since the relative vector from up to down looking antenna can easily be determined, the down looking antenna phase centre is also well determined from these measurements.

The receiver locks in to the down looking antenna (which has the appropriate polarization to account for the change in polarization from reflection, LHCP for GPS or GALILEO signals). It then compares the extra delay of the

signal, $\Delta$, with respect to the up looking signal. This can be done using code or phase ranging (for phase ranging the use of the time-averaged Interferometric field provides a robust method for a wide range of sea conditions). The extra delay is due to the extra path length from the reflection process and a constant system bias, and it is unaffected by atmospheric effects, which are common to direct and reflected signal in this scenario, where we assume the receiver is less than a few hundred meters from the reflecting surface. Now,

$$\Delta = 2 \ (D+d) \ \sin \ \alpha \ + \ C$$

(see the following figure). Using several measurements and the exact position in the sky of the emitter being known, the system determines the altitude of the down-looking antenna with respect to the Mean Sea Surface, **D.** Note that **d,** the separation between the antenna phase centres, is easily measurable before hand (for simplicity we portray a 2D version of the picture). This results in D.

The altitude of the Mean Sea Surface with respect to the Earth Centre is now seen to be **H=R-(D+d).** These measurements are extracted from all the available satellites in view. This system is therefore an Absolute Tide Gauge.

For **phase ranging altimetric purposes,** it is very important to use the Interferometric average field, which is immune to common errors to direct and reflected signals (such as the navigation bit). The use of multiple frequencies is also envisioned, as it will allow synthesis of different wavelengths (PIP concept).

For **sea state and current measurements,** the instantaneous field (or quasi instantaneous) is used to extract wave spectral information from the field time series from different satellites (in different directions). These have a specific impact on the power and phase characteristics, with a specific dependence on elevation angle and direction. This can be used to separate this affects from other such as those due to **pollution** or **salinity,** which impact both the dielectric constant and the surface roughness.

For **bridge or lake applications** it is important to position the antennas to give them a good view of the sky and of the reflected surface (the "reflected sky"). The antennas do not have to be near each other, as long as the relative position vector can be measured (This can be done using GNSS differential positioning, for instance).

For **moving airborne applications,** it is also possible to use the full Delay Doppler maps to extract surface parameters. This can be done by model fitting with all the available reflections by minimizing a single functional of the relevant parameters (such as the directional mean squared slope or surface dielectric constant) that is the sum of terms for each satellite in view measuring Delay Doppler measurement to model error (such as least squares or other estimators adapted to the noise type). Measurements from different sensors in the area can also be combined, as well as measurements from other types of sensors. Such models may be non-linear, but standard techniques to linearize the problem and tracking the parameters (such as Kalman filtering) can be used.

**Current** measurements can be obtained from the impact of currents on the field (Doppler centroid) including its spectral bandwidth.

**Method 2: Absolute Altimetry and Wave Monitoring using 1 antenna and/or one front end.**

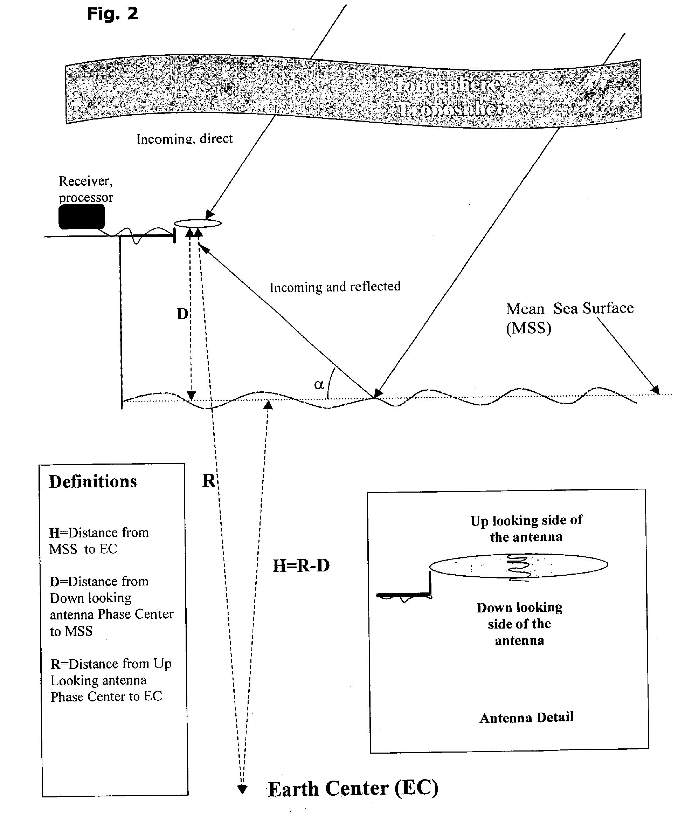

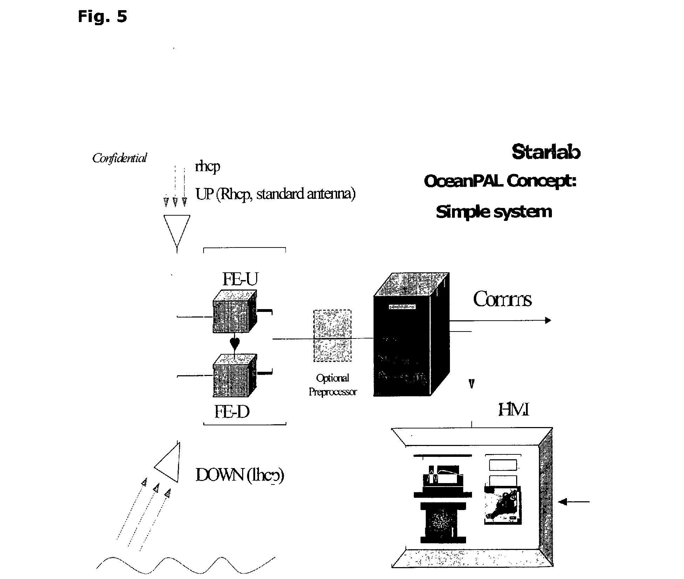

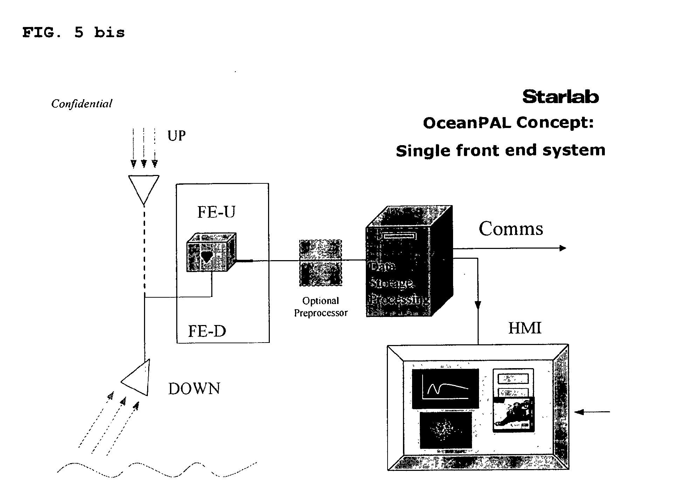

In the following, a second method (method 2) is described with reference to figure 2 and/or to figure 5 bis. The important aspect of this method is the up and down signals are recovered and combined prior to the front end section, as show in figure 5 bis.

This method is like Method 1, except that it uses only one antenna and/or one front end. This method is useful for situations in which the receiver is farther from the reflecting surface and/or the code chip is shorter, and/or some other method is used to set enough delay between the direct and reflected signals, so they can be separated by processing. It is important that the direct and reflected signals be separated in time/space by a factor greater than one chip. Typical precision chip lengths for GPS and Galileo will be of the order of 30 m.

The receiver locks in to the up looking antenna's signal (the direct signal), and uses it for GNSS positioning of the up looking antenna phase centre. This means we have measured **R**, the distance from the up looking antenna to the Earth Centre. During this process both Tropospheric and ionospheric effects are corrected and calibrated for. Precision and accuracy are of the order of a few millimetres.

In the case of a single antenna, the antenna has **no ground plane**, so it is able to recover signals from below. Note that the configuration has already the appropriate polarization to account for the change in polarization from reflection, LHCP for GPS or GALILEO signals: a right hand up looking antenna is a left hand down looking antenna---just what is needed to account for the change of polarization upon reflection.

The receiver can also lock into the reflected signal and provide phase and code ranging information.

The receiver compares the extra delay, $\Delta$, between the two correlation peaks (using phase or code). This extra delay is due to the extra path length from the reflection process and a constant system bias, and it is unaffected by atmospheric effects, which are common to direct and reflected signal in this scenario, where the receiver is less than a few hundred meters from the reflecting surface. Just as before,

$$\Delta = 2\ \mathbf{D}\ \textbf{sin}\ \alpha\ +\ \mathbf{C}$$

Using several measurements and the exact position in the sky of the emitter being known, the system determines the altitude of the antenna with respect to the Mean Sea Surface, **D**.

The altitude of the Mean Sea Surface with respect to the Earth Center is now seen to be **H=R-D.** The system is thus providing again absolute altimetric measurements.

**Method 3: Relative Altimetry and Wave monitoring using 1 antenna**

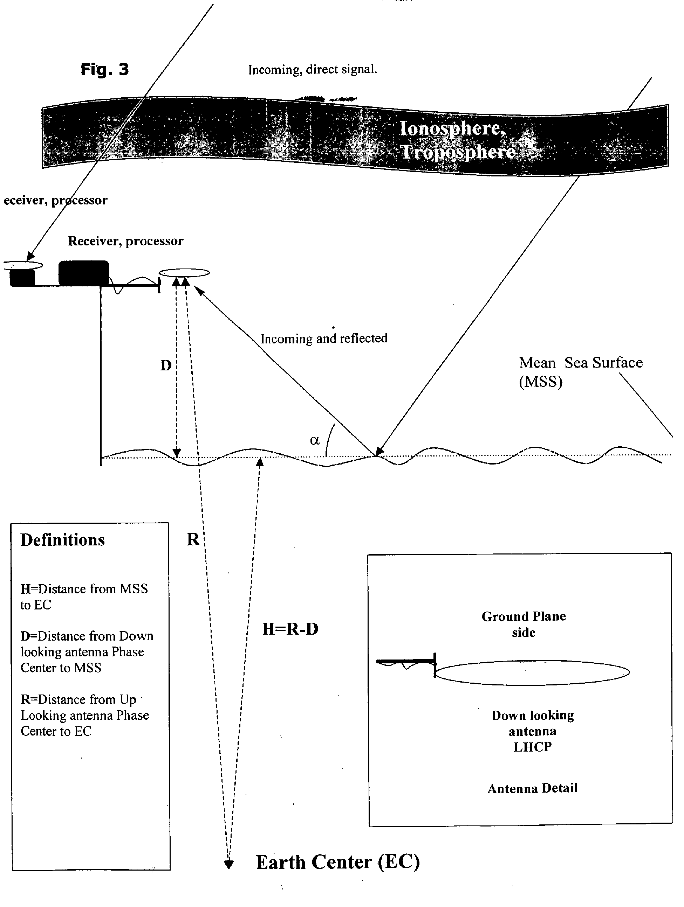

In the following, a third method (method 3) is described with reference to figure 3 and 5 bis. This method is useful especially when the water surface is calm, thus acting closely like a mirror through which the sky can be seen, or if only the sea state is of interest (not altimetry), for example.

This method uses only one down looking antenna.

For altimetric purposes, the receiver locks in to the down looking antenna's signal (the reflected signal), and uses it for GNSS positioning of the down looking antenna phase centre, using the mirror principle.

The antenna has **a ground plane,** so it is not able to recover signals from above. Note this means the configuration must have the appropriate polarization to account for the change in polarization from reflection, LHCP for GPS or GALILEO signals.

The apparent position of the antenna is affected by the reflection process (as in a mirror). The receiver will predict an erroneous altitude of

$$R'=R-2\ D + \text{errors due to Tropospheric and ionospheric effects.}$$

where **R** is as before the distance to the Earth Centre in the GNSS coordinate system.

Thus, the system will be sensitive to changes in tide, **D.**

If an extra receiver nearby or models are then used to measure the ionospheric and Tropospheric delays, the system can provide absolute altimetry. Ionospheric errors can be corrected using a dual frequency system as in the standard way, or by combining phase and group delays, as in the standard way. Tropospheric errors can be corrected as in the standard way, especially if the surface is calm.

If the antenna is positioned absolutely at some time by some means, the quantity **R** will be known and fixed for. Without such calibration, this system is still sensitive to tide changes (relative altimetry).

Even if altimetry is difficult with only one antenna, the system will still be very sensitive to sea state, even if it is not possible to obtain accurate altimetric solutions. This is because even if it is difficult to lock robustly into many satellites, the system can search for satellites in view using an almanac, models, or blind search, and information can be retrieved from the reflected field temporal behavior after good correlations are found.

In the following, certain characteristic features of the afore-described methods 1 to 3 are summarized:

The system can be divided into an Up (U) and a Down (D) looking section. Multiple frequencies of GNSS can be used. The Up looking Antenna (or antennas, if dual polarization is used) gathers the direct signal, amplifies it and sends it the Front End Up section (FE-U) section, where the signals are down converted and sampled at a sufficiently high frequency. The same process is carried out at in the down looking section. It is important that both front ends use the same clock for down conversion and sampling (symbolized by a unique heart in the Figures).

It is also possible to use a single front end, sampling and clock if the direct and reflected signals are separated by sufficient relative temporal delay (and this depends on the chip length and/or hardware set up). Thus, depending on the chip length, the system with the single front end, sampling and clock can be used if the height above the reflecting surface is high enough.

The signals, after down conversion and sampling are optionally sent to a data storage system, for processing. Optionally, the signals can be sent to a preprocessing section where the complex correlations are computed and passed on, achieving significant data compression.

The up looking signal is processed for accurate positioning using code and phase ranging as well as positioning of the up-looking antenna and to extract complex correlations in the standard way. The down looking signal is processed to extract correlations in the standard way. Coherent integration time should be as large as permitted by navigation bit uncertainty.

These complex cross-correlation quantities can be used in combinations (up-down, different frequencies and polarizations) for code/phase ranging, or for direct and Interferometric processing to obtain surface information (roughness, salinity, pollution, altimetry, currents, etc).

For example, the ratio of the reflected to the direct complex correlation corresponding to the same portion of the emitted signal can be modelled by a modulus and a phase. The modulus is directly related to the ratio of reflected to emitted power. The phase is related to the difference in arrival times---related to the interference between the direct and reflected fields. Thus, this ratio of complex correlations can be interpreted as the ratio of the complex direct and reflected fields, an important quantity.

The different behavior of the signal characteristics with respect to changes in elevation, direction, time, etc, as a function of the desired parameters (sea elevation, orbital motion, roughness, salinity, pollution, currents), is an important element to separate all these contributions. For instance, Salinity is a slowly evolving quantity, and the salinity signal has characteristic elevation and direction dependent behavior.

The application described for coastal or platform applications for altimetry and sea state, salinity, pollution and currents.

The average or filtered Interferometric field (not phase) is used for carrier phase ranging. This is a very robust method, especially if an *a priori* altimetric model is available (e.g., for tides) to "correct" (counter rotate) the Interferometric field measurements and thus allow for longer temporal averaging. This technique can mitigate the loss of coherence of the reflected field.

The Interferometric field can be modelled as an amplitude and a phase. The phase can be modelled by a sum of terms: a term proportional to the relative altitude of the receiver with respect to the surface times the sine of the elevation, plus a bias term. If a good guess of the relative altitude is available (for example, from a mean sea surface model, including tides, or from previous measurements), then the measured Interferometric field can be multiplied by a phasor with a phase as above but with a minus sign. This will produce a new Interferometric field which will be sensitive only to variations with respect to the estimated phase and corresponding altitude and will be more slowly varying, thus allowing for longer and more robust averaging.

For altimetric purposes, said Interferometric field phase is then modelled by a relative altitude and a bias parameter. These parameters can be separated due to the fact that the bias term does not depend on elevation angle. Since the field is noisy, due to surface motion and thermal noise, averaging techniques can be used, since the geophysical component of field variation is of very low frequency. Techniques like a smoothing window or a Kalman filter can be used.

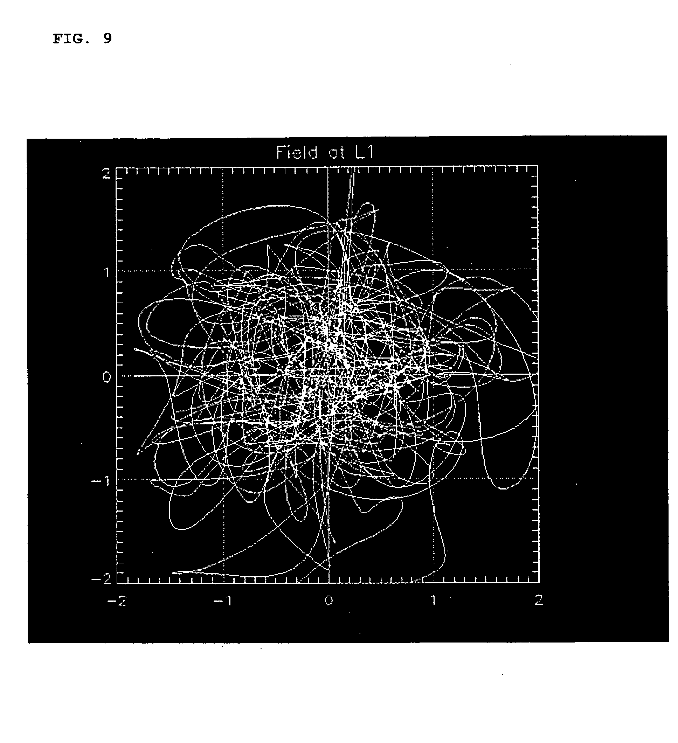

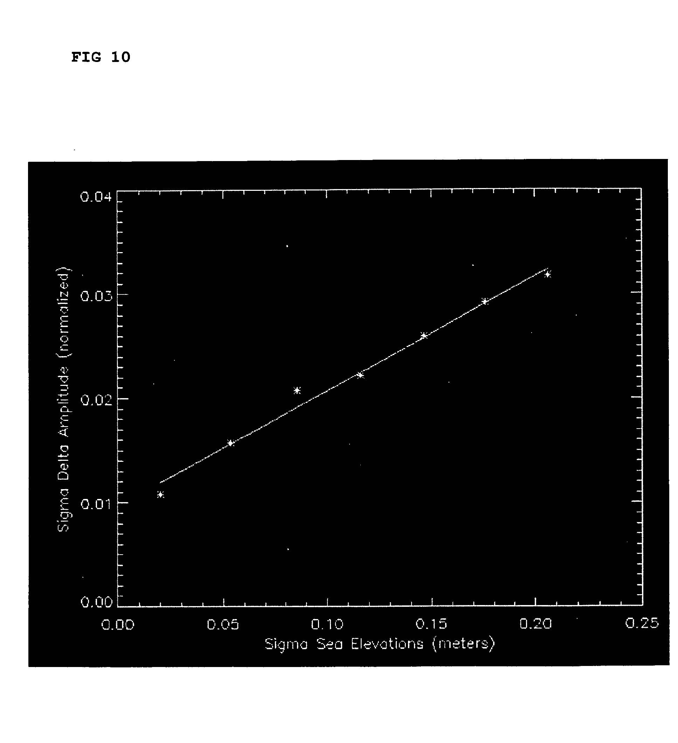

The instantaneous Interferometric field is also analysed for Doppler width, amplitude and phase temporal dynamics and statistics, to infer sea state, currents and dielectric constants. In figure 9 we see an example of the behavior of the Interferometric field as a function of time, due to surface motion. For instance, if the surface was perfectly still, the graph would show a single point, with amplitude and phase dependent on reflectivity of the surface and receiver/surface relative altitude. Oil spills or other pollution severely affect surface roughness and dielectric properties. These signatures, available at different elevation angles, frequencies, directions, polarizations (e.g., if two down-looking antennas are used) and over long time scales, are used for geophysical inversion of these parameters (using either models, empirical or semi-empirical approaches). Just as an example, in figure 10 we show the relationship of a parameter associated to the reflecting surface (significant wave height) to a parameter associated with the field statistics (the variability in the amplitude velocity) for a simulation using a particular ocean spectrum and limited range of surface wind speeds (which affect the modelled spectrum).

As mentioned, for moving airborne applications, it is also possible to use the full Delay Doppler maps to extract surface parameters. This can be done by model fitting with all the available reflections by minimizing a single functional of the relevant parameters (such as the directional mean squared slope or surface dielectric constant) that is the sum of terms for each satellite in view measuring Delay Doppler measurement to model error (such as least squares or other estimators adapted to the noise type). Measurements from different sensors in the area can also be combined, as well as measurements from other types of sensors. Such models may be non-linear, but standard techniques to linearize the problem and tracking the parameters (such as Kalman filtering) can be used.

The measurements thus obtained are of absolute nature, and of great value for operational and climatic applications. This is because the measurements are based on the relative field (reflected versus direct) and because they are based on GNSS technology, with is self-calibrating in a similar way.

The measurements can also be used in network fashion, providing and exchanging data from coasts, ships, platforms, aircraft, to an assimilation (which can be centralized or distributed on, e.g., the sensors themselves) system for the provision of better sea state products.

We propose using direct and reflected signals (from sources such as GNSS, like GPS and Galileo or their augmentation systems) using both carrier and code pseudo-ranges from ground (low altitude) sensors to infer the sea, river, lake height or coastal sea level as well as the sea state and currents and salinity from a receiving system on a static or slowly moving platform, e.g., a bridge a coast cliff, a platform, aircraft or a boat. The system can act as an Absolute Tide, Sea State, Current, Pollution, Salinity Remote Sensing System, with applications also in rivers and lakes.

Both direct and reflected GNSS signals are used to obtain water level referred to the GNSS coordinate system (which itself refers to the Earth Centre). This system can provide absolute altimetric and power measurements without the need for complicated set-ups or recalibration. We are also proposing the reception and use of the reflected signal to infer directional sea surface roughness (which is also related to pollution) and directional sea surface motion (both orbital velocities as well as horizontal), which is related to sea state and surface winds and currents. Salinity and Pollution information can also be extracted from the absolute power measurement capability from different reflection at different elevation angles and directions and over long time scales.

This is a cheap, low maintenance, accurate and precise method, and available on a long term basis thanks to the long life of GNSS. Long term stability and compatibility with airborne and spaceborne mission using this concept make this an ideal system for climatic monitoring.

The system can also be deployed on boats or ships, to provide sea state measurements, which can be shared among them and with coastal sensors via an amenable communication system to provide a network for sea state monitoring and alert as well as prediction, where the users are also the data providers. The information from other sensors (e.g. met) on the platforms can also be exchanged.

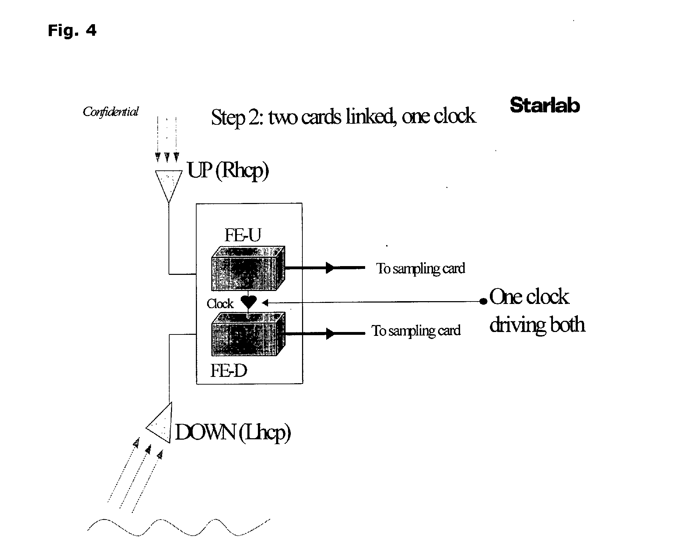

**In the following, certain specific aspects and details of the invention are described with reference to figures 4 to 8.**

In figure 4 we see the up and down looking antennas (the up looking rhcp, the down looking with opposite polarization, as appropriate with GPS). The amplified signals (LNA not shown) are then sent to the front-end sections. A single, common clock, drives the down-conversion and sampling of the signal, which are then sent to the acquisition system for processing (not shown).

For a dual (or higher) frequency system, the number of front elements is doubled (or higher), for example, always preserving clock synchronization.

In figure 5 we see the up and down looking antennas (the up looking rhcp, the down looking with opposite polarization, as appropriate with GPS). The amplified signals (LNA not shown) are then sent to the front-end sections. A single, common clock, drives the down-conversion and sampling of the signal, which are then sent to the acquisition system for processing. An optional pre-processor, used to carry out the correlations, can be used to pass the complex correlated signals to the processing section and data storage. A Human Machine Interface is also shown. A communications link is also depicted.

For a dual frequency system (or multi-frequency, more generally), the number of front elements is doubled (or higher), for example, always preserving clock synchronization.

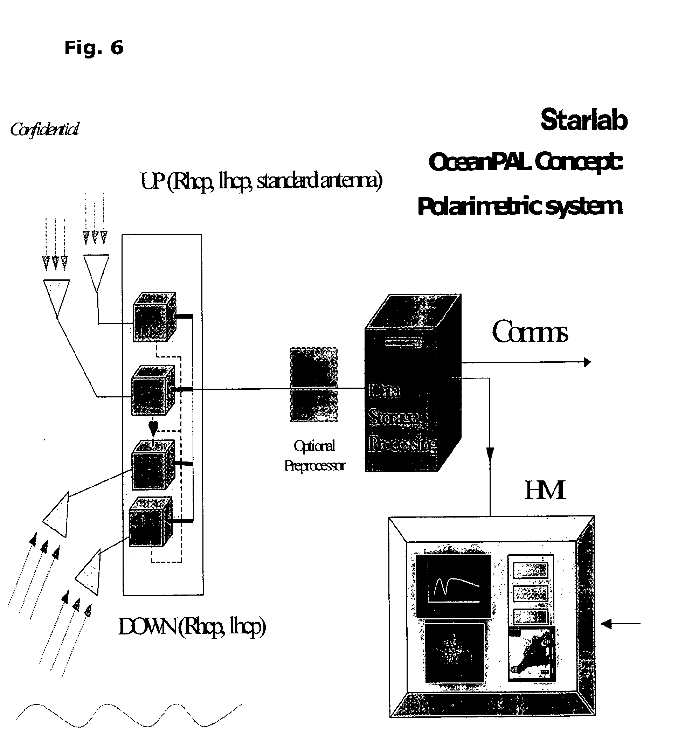

In figure 6 we see the up and down looking antennas (the up looking section consisting of both rhcp and lhcp, the down looking with equal polarization). The amplified signals (LNA not shown) are then sent to the front end sections. A single, common clock, drives the downconversion and sampling of the signal, which are then sent to the acquisition system for processing. An optional pre-processor, used to carry out the correlations, can be used to pass the complex correlated signals to the processing section and data storage. A Human Machine Interface is also shown. A communications link is also depicted.

For a dual frequency system (or higher), the number of front elements is doubled (or higher), for example, always preserving clock synchronization.

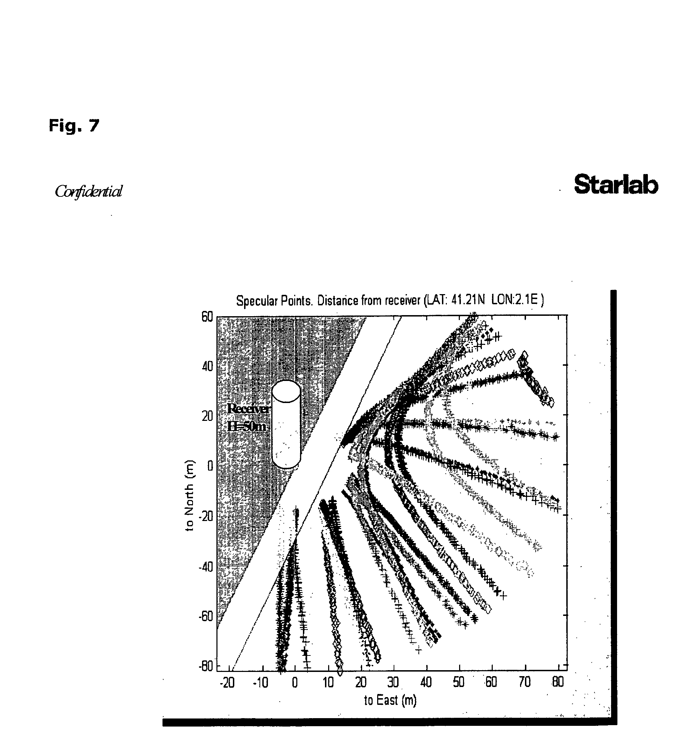

In Fig. 7 we see the specular point tracks (using GPS only) for a 24 h period (this picuture repeats, to a good degree of approximation, every 24 h), as seen from a 50 m high antenna system. The tracks are cut off at an elevation angle of 20 degrees in this picture. A bigger swath can be obtained with lower cutoffs and/or higher antenna deployments.

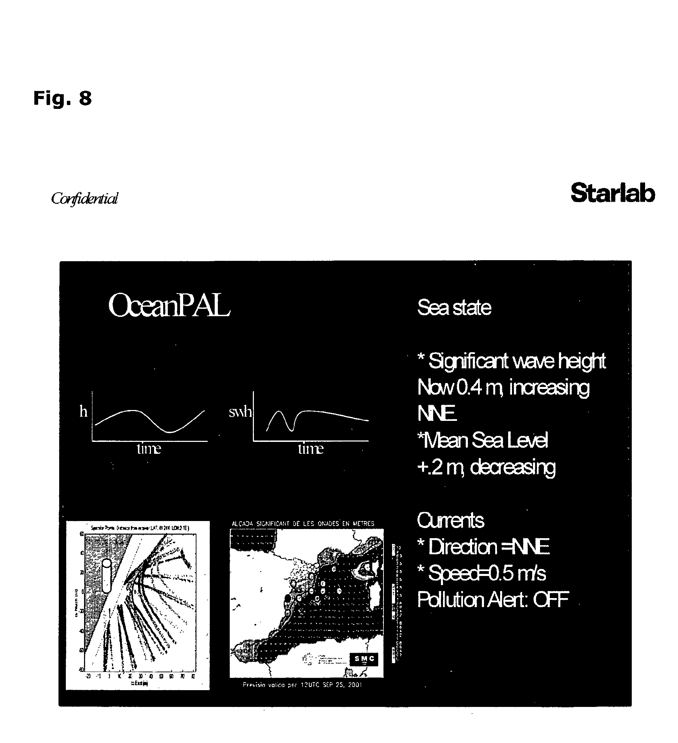

In figure 8 we see what the system may show to the user. A time history of sea height and significant wave height are show, as well the location of the specular points used and in view, and a map of all the other systems connected to the network. It is envisioned that a network of such systems, e.g., in boats, coasts, platforms, aircraft, etc., will operate jointly using present and future communication infrastructures to deliver more powerful operational or scientific products. The sea state from a simulated assimilation system using the network data is also shown. In a numerical format, we can have the instantaneous significant wave height, wave direction, mean sea level, mean wave period, salinity, currents, a pollution alerts, etc.

## Claims

1. A system for monitoring at least one feature of a surface, said system comprising an antenna receiving navigation signals from a Global Navigation Satellite System component (e.g. GNSS like Galileo, GPS, Glonass and Augmentation systems, including ground pseudo-lites, or future Earth bound or planet/space-bound navigation/positioning/communication systems) or an other satellite system indirectly via reflection from said surface and means for deriving from said reflected signals said feature to be monitored.

2. A system according to claim 1, **characterized in that** said feature is obtained from electric field measurements from the reflected and optionally the directly received signals.

3. A system according to claim 2, **characterized in that** said feature is measured using the interferometric electric field, as obtained from combining the direct and reflected electric fields, each as obtained from correlation with GNSS codes, known signals aspects, direct correlation of direct and reflected signals, or in other ways, in particular by using different frequencies and polarizations.

4. A system according to claim 1, **characterized in that** said feature is the altimetry of the surface, as measured using code ranging of the reflected and optionally the directly received signals, each as obtained from correlation with the known codes.

5. A system according to claim 2, **characterized in that** said feature is the altimetry of the surface, as measured using the measured interferometric field as obtained from combining the direct and reflected electric fields, each as obtained from correlation with the known codes.

6. A system according to claim 1, using the average interferometric field or other means to obtain an a priori solution and using said an a priori for couter-rotation of the Interferometric field phasor, for more robust field tracking in dynamic situations (such as altimetry from an aircraft).

7. A system according to claim 3 in which wide-lane techniques (PIP) are used for the direct and for the reflected signal prior to forming the interferometric field combination.

8. A system according to one of the previous claims, **characterized in that** said feature is a state of said surface, said state affecting the reflectivity of the surface with regard to said indirectly received signals.

9. A system according to one of the previous claims in which said surface is a water body.

10. A system according to claim 9, **characterized in that** feature state is a current in said water body.

11. A system according to claim 9, **characterized in that** said feature is the dielectric constant in said water body.

12. A system according to claim 9, **characterized in that** said feature is the salinity in said water body.

13. A system according to claim 9, **characterized in that** said feature is the surface pollution of said water body.

14. A system according to claim 9 **characterized in that** said feature is the spatio-temporal elevation spectrum of said surface, also related to surface winds and pollution.

15. A system according to claim 9, **characterized in that** said feature is a surface roughness (directional mean square slope) of the water body.

16. A system according to claim 9, **characterized in that** said feature is water surface motion.

17. A system according to one of the preceding claims, **characterized in that** said antenna is positioned in low-medium altitude, in particular on a bridge, at a coast cliff, on an off-shore platform, or on a boat or aircraft.

18. A system according to one of the preceding claims, **characterized in that** said antenna is positioned on a slowly moving platform with respect to the reflecting surface, in particular on a boat, aircraft, balloon, stratospheric platform, or geo-stationary satellite.

19. A system according to one of the preceding claims, **characterized in that** the same antenna and a unique receiver are provided for the directly received signals and the indirectly received signals, respectively.

**20.** A system according to one of the preceding claims, **characterized in that** different antennas and one or two synchronized receivers are provided for the directly received signals and the indirectly received signals, respectively.

**21.** A system according to one of the preceding claims, **characterized in that** the antenna receiving the signals directly is looking essentially upwards, and the antenna receiving the signals indirectly is looking essentially downwards.

**22.** A system according to one of the preceding claims, **characterized in that** the antenna receiving the signals directly is looking essentially upwards with full polarization, and the antenna receiving the signals indirectly is looking essentially downwards, with full polarization.

**23.** A system according to one of the preceding claims, **characterized in that** inversions for surface properties exploit the multi-frequency and multi-polarization capacities of GNSS.

**24.** A combined system composed of an array or network of systems according to one of the previous claims.

**Fig. 1**

Ionosphere, Troposphere

Incoming, direct

Receiver, processor

d

Incoming and reflected

Mean Sea Surface (MSS)

D

α

R

**Definitions**

H=Distance from MSS to EC

D=Distance from Down looking antenna Phase Center to MSS

R=Distance from Up Looking antenna Phase Center to EC

d= Distance between Antenna Phase Centers.

$H=R-(D+d)$

Up looking antenna

Down looking antenna
LHCP

**Antenna Detail**

**Earth Center (EC)**

**Fig. 2**

Ionosphere, Troposphere

Incoming, direct

Receiver, processor

Incoming and reflected

Mean Sea Surface (MSS)

D

α

**Definitions**

**H**=Distance from MSS to EC

**D**=Distance from Down looking antenna Phase Center to MSS

**R**=Distance from Up Looking antenna Phase Center to EC

R

**H=R-D**

Up looking side of the antenna

Down looking side of the antenna

**Antenna Detail**

**Earth Center (EC)**

**Fig. 3**

Incoming, direct signal.

Ionosphere, Troposphere

eceiver, prøcessor

Receiver, processor

D

Incoming and reflected

Mean Sea Surface (MSS)

α

**Definitions**

H=Distance from MSS to EC

D=Distance from Down looking antenna Phase Center to MSS

R=Distance from Up Looking antenna Phase Center to EC

R

**H=R-D**

**Ground Plane side**

**Down looking antenna LHCP**

**Antenna Detail**

**Earth Center (EC)**

**Fig. 4**

*Confidential*   Step 2: two cards linked, one clock   **Starlab**

UP (Rhcp)

FE-U

To sampling card

Clock   One clock driving both

To sampling card

FE-D

DOWN (Lhcp)

**Fig. 5**

**FIG. 5 bis**

*Confidential*

**Starlab**

**OceanPAL Concept:**

**Single front end system**

**Fig. 6**

**Fig. 7**

Specular Points. Distance from receiver (LAT: 41.21N  LON:2.1E )

**Fig. 8**

**Starlab**

FIG. 9

FIG 10

European Patent Office

**EUROPEAN SEARCH REPORT**

Application Number

EP 02 01 2092

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MARTIN-NEIRA M ET AL: "THE PARIS CONCEPT: AN EXPERIMENTAL DEMONSTRATION OF SEA SURFACE ALTIMETRY USING GPS REFLECTED SIGNALS" IEEE TRANSACTIONS ON GEOSCIENCE AND REMOTE SENSING, IEEE INC. NEW YORK, US, vol. 39, no. 1, 1 January 2001 (2001-01-01), pages 142-150, XP001017570 ISSN: 0196-2892 | 1-3,5,9, 17,20,21 | G01S13/00 G01S13/95 G01S5/14 G01F23/284 |
| Y | * abstract *<br><br>* chapter II. A. *<br>* chapter III. A. *<br>* chapter IV. B. * | 7,10,13, 16 | |
| X | GARRISON J L ET AL: "The application of reflected GPS signals to ocean remote sensing" FIFTH INTERNATIONAL CONFERENCE ON REMOTE SENSING FOR MARINE AND COASTAL ENVIRONMENTS, SAN DIEGO, CA, USA, 5-7 OCT. 1998, vol. 73, no. 2, pages 175-187, XP002210508 Remote Sensing of Environment, Aug. 2000, Elsevier, USA ISSN: 0034-4257 * page 175 * * page 180, right-hand column * * page 181 *<br><br>--/-- | 1-5,8,9, 15,17, 18,20,21 | TECHNICAL FIELDS SEARCHED (Int.Cl.7)<br><br>G01S |

The present search report has been drawn up for all claims

| Place of search | Date of completion of the search | Examiner |
|---|---|---|
| MUNICH | 23 August 2002 | Grübl, A |

EPO FORM 1503 03.82 (P04C01)

**European Patent Office**

## EUROPEAN SEARCH REPORT

Application Number

EP 02 01 2092

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LOWE S T ET AL: "An ocean-altimetry measurement using reflected GPS signals observed from a low-altitude aircraft" IGARSS 2000. IEEE 2000 INTERNATIONAL GEOSCIENCE AND REMOTE SENSING SYMPOSIUM. TAKING THE PULSE OF THE PLANET: THE ROLE OF REMOTE SENSING IN MANAGING THE ENVIRONMENT. PROCEEDINGS (CAT. NO.00CH37120), IGARSS 2000. IEEE 2000 INTERNATIONAL GEOSCIENCE AND, pages 2185-2187 vol.5, XP002210509 2000, Piscataway, NJ, USA, IEEE, USA ISBN: 0-7803-6359-0 * abstract * * chapter EXPERIMENTAL SETUP * * chapter DATA PROCESSING * | 1-6,17, 18,20,21 | |
| X | EMERY W J ET AL: "Ocean Wind and Land Surface Student Satellite (OWLS)" 2000 INTERNATIONAL GEOSCIENCE AND REMOTE SENSING SYMPOSIUM (IGARSS 2000);HONOLULU, HI, USA JUL 24-JUL 28 2000, vol. 7, 2000, pages 3084-3086, XP002210510 Dig Int Geosci Remote Sens Symp (IGARSS);International Geoscience and Remote Sensing Symposium (IGARSS) 2000 IEEE, Piscataway, NJ, USA * page 3084, paragraph INTRODUCTION * | 1,2,8,9, 11,12,15 | TECHNICAL FIELDS SEARCHED (Int.Cl.7) |
| D,X | US 5 546 087 A (MARTIN NEIRA MANUEL) 13 August 1996 (1996-08-13)  * abstract; claims 1-4,10 * * column 1, line 65 - column 2, line 2 * * column 2, line 45-67 * * column 15, line 39 - column 16, line 42 * | 1-5,9, 14,17, 20,21 | |

--/--

The present search report has been drawn up for all claims

| Place of search | Date of completion of the search | Examiner |
|---|---|---|
| MUNICH | 23 August 2002 | Grübl, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 02 01 2092

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ZUFFADA C ET AL: "Altimetry with reflected GPS signals: results from a lakeside experiment" IGARSS 2000. IEEE 2000 INTERNATIONAL GEOSCIENCE AND REMOTE SENSING SYMPOSIUM. TAKING THE PULSE OF THE PLANET: THE ROLE OF REMOTE SENSING IN MANAGING THE ENVIRONMENT. PROCEEDINGS (CAT. NO.00CH37120), IGARSS 2000. IEEE 2000 INTERNATIONAL GEOSCIENCE AND, pages 2864-2866 vol.7, XP002210511 2000, Piscataway, NJ, USA, IEEE, USA ISBN: 0-7803-6359-0 * abstract * | 1-5,19 | |
| X | THOMPSON D R ET AL: "Polarization dependence of GPS signals reflected from the ocean" IGARSS 2000. IEEE 2000 INTERNATIONAL GEOSCIENCE AND REMOTE SENSING SYMPOSIUM. TAKING THE PULSE OF THE PLANET: THE ROLE OF REMOTE SENSING IN MANAGING THE ENVIRONMENT. PROCEEDINGS (CAT. NO.00CH37120), IGARSS 2000. IEEE 2000 INTERNATIONAL GEOSCIENCE AND, pages 3099-3101 vol.7, XP002210512 2000, Piscataway, NJ, USA, IEEE, USA ISBN: 0-7803-6359-0 * abstract * | 1-3,22 | TECHNICAL FIELDS SEARCHED (Int.Cl.7) |
| D,X | US 6 137 433 A (CLIFFORD STEVEN F ET AL) 24 October 2000 (2000-10-24) * abstract * * column 1, line 6-33 * * column 8, line 19-43 * | 1-3,8,9, 15-18 | |

-/--

The present search report has been drawn up for all claims

| Place of search | Date of completion of the search | Examiner |
|---|---|---|
| MUNICH | 23 August 2002 | Grübl, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

European Patent
Office

**EUROPEAN SEARCH REPORT**

Application Number

EP 02 01 2092

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | ALLAN N ET AL: "Ship borne remote sensing of submesoscale oceanographic features along the northern boundary of the Gulf Stream" GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRETATION., INTERNATIONAL PASADENA, CA, USA 8-12 AUG. 1994, NEW YORK, NY, USA, IEEE, US, 8 August 1994 (1994-08-08), pages 1723-1727, XP010138495 ISBN: 0-7803-1497-2 * page 1723, paragraph INTRODUCTION * | 10,13,16 | |
| Y | US 5 148 179 A (ALLISON MICHAEL T) 15 September 1992 (1992-09-15) * column 3, line 63 - column 4, line 15 * | 7 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 23 August 2002 | Grübl, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 1 262 792 A1

**ANNEX TO THE EUROPEAN SEARCH REPORT
ON EUROPEAN PATENT APPLICATION NO.**

EP 02 01 2092

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2002

| Patent document cited in search report | | Publication date | Patent family member(s) | | Publication date |
|---|---|---|---|---|---|
| US 5546087 | A | 13-08-1996 | FR | 2712095 A1 | 12-05-1995 |
| US 6137433 | A | 24-10-2000 | NONE | | |
| US 5148179 | A | 15-09-1992 | AU | 2253992 A | 25-01-1993 |
| | | | WO | 9300593 A1 | 07-01-1993 |